# FASCICULE DE BREVET EUROPEEN

(11) **EP 0 904 624 B1**
(45) Date de publication et mention de la délivrance du brevet: **23.07.2003**
(21) Numéro de dépôt: 97921858.3
(22) Date de dépôt: 07.05.1997
(51) Int. Cl.: H02J 7/16

(54) **PROCEDE ET DISPOSITIF DE COMMANDE D'UN ALTERNATEUR DE VEHICULE AUTOMOBILE**
VERFAHREN UND VORRICHTUNG ZUR REGELUNG EINER FAHRZEUGLICHTMASCHINE
MOTOR VEHICLE ALTERNATOR CONTROL METHOD AND DEVICE

(30) Priorité: 14.06.1996 FR 9607588
(43) Date de publication de la demande: 31.03.1999
(73) Titulaire: Siemens VDO Automotive S.A.S., 31036 Toulouse Cédex 01 (FR)
(72) Inventeur: DESROCHES, Philippe, F-31200 Toulouse (FR); DEGARDINS, Pascal, F-31410 Le Fauga (FR); WEIL, Hans-Georg, D-38518 Gifhorn (DE)
(74) Mandataire: Berg, Peter, Dipl.-Ing.
(86) Numéro de dépôt international: EP9702338
(87) Numéro de publication internationale: WO97048164

(56) Documents cités:
- EP-A- 0 179 985
- DE-A- 4 108 751
- FR-A- 2 594 273

## Description

La présente invention est relative à un procédé et un dispositif de commande d'un alternateur de véhicule automobile, du type selon lequel on commande l'intensité d'un courant d'excitation de l'alternateur en fonction de conditions de fonctionnement du moteur et du véhicule.

On connaît de la technique antérieure, notamment du document FR 2 594 273, un dispositif de commande d'un alternateur permettant de moduler son courant d'excitation en fonction des conditions de fonctionnement du moteur et / ou du véhicule, de manière à surexciter celui-ci en décélération et à le désexciter en accélération. Un tel dispositif permet d'améliorer le rendement global de l'ensemble moteur et alternateur. Cependant, cette amélioration est limitée par la nécessité de restreindre les phases de désexcitation afin d'éviter une décharge trop importante de la batterie. En effet, un tel dispositif observant uniquement les conditions de fonctionnement instantanées du moteur, ne peut permettre le maintien d'une phase de désexcitation en deçà d'un certain niveau de charge de la batterie, et force la remise en service de l'altemateur même si des conditions plus propices à la recharge de la batterie doivent être rencontrées ultérieurement.

La présente invention a donc pour but de fournir un procédé et un dispositif de commande d'un alternateur de véhicule automobile qui permette de prendre en compte les conditions de fonctionnement sur l'ensemble d'un trajet et d'améliorer l'optimisation de l'ensemble alternateur et moteur.

On atteint ces buts de l'invention, ainsi que d'autres qui apparaîtront dans la suite de la présente description, au moyen d'un procédé de commande d'un altemateur fournissant un courant électrique alimentant des consommateurs électriques d'un véhicule automobile équipé d'un moteur à combustion interne et rechargeant une batterie, selon lequel on commande l'intensité d'un courant d'excitation de l'alternateur en fonction de conditions de fonctionnement du moteur et du véhicule sur un trajet Selon l'invention, pour chaque trajet, on détermine un état de charge initial de la batterie, on calcule un profil temporel des vitesses de rotation de l'alternateur probable pour ce trajet, on mesure le courant absorbé par les consommateurs, on détermine un profil temporel optimal du courant d'excitation de l'alternateur tel qu'à l'issue du trajet, l'état de charge final de la batterie soit au moins égal à un seuil prédéterminé, et on commande l'intensité du courant d'excitation en fonction du profil de courant déterminé. Avantageusement, on actualise périodiquement la mesure du courant absorbé et on recalcule à chaque actualisation le profil optimal d'excitation à appliquer à l'altemateur.

Selon un premier mode de mise en oeuvre de l'invention, on calcule le profil temporel des vitesses de rotation de l'alternateur à partir d'enregistrements effectués lors des trajets précédents.

Selon un second mode de mise en oeuvre de l'invention, on calcule le profil temporel des vitesses de rotation de l'alternateur à partir d'informations relatives au trajet prévu fournies par un dispositif de navigation embarqué dans le véhicule.

Avantageusement, dans ce mode de mise en oeuvre, on utilise en outre des informations relatives à la densité du trafic sur le trajet considéré fournies par un récepteur d'informations de trafic de type RDS couplé au dispositif de navigation.

Suivant une caractéristique importante de l'invention, on calcule le profil temporel optimal du courant d'excitation de telle sorte que le rendement de l'alternateur soit maximal si sa vitesse de rotation est supérieure à un seuil prédéterminé et que le courant d'excitation soit nul dans le cas contraire.

Selon l'invention, on propose encore un dispositif pour la mise en oeuvre du procédé, comportant en association des moyens de communication avec au moins l'un des dispositifs de gestion du moteur et de navigation, des moyens de mesure adaptés pour déterminer l'état de charge de la batterie et l'intensité du courant fourni aux consommateurs électriques du véhicule, des moyens de calcul et de mémorisation adaptés pour calculer, à partir des informations transmises par les moyens de communication, au début de chaque trajet, un profil temporel des vitesses de rotation de l'alternateur probable pour ce trajet, déterminer en fonction des informations fournies par les moyens de mesure, un profil temporel optimal du courant d'excitation de l'alternateur tel qu'à l'issue du trajet, l'état de charge final de la batterie soit au moins égal à un seuil prédéterminé, et des moyens de commande de l'intensité du courant d'exdiation fourni à l'alternateur.

D'autres caracténstiques et avantages de l'invention apparaîtront à la lecture de la description qui va suivre et à l'examen des dessins annexés dans lesquels:
- la figure 1 représente un schéma fonctionnel du dispositif selon l'invention,
- les figure 2A et 2B représentent des graphes temporels comparatifs de l'état de charge de la batterie en fonction d'un profil temporel de rotation de l'alternateur, respectivement obtenus avec la technique antérieure et le procédé selon l'invention, et
- la figure 3 représente un diagramme des courbes de rendement d'un alternateur, mémorisées dans le dispositif et utilisées par le procédé.

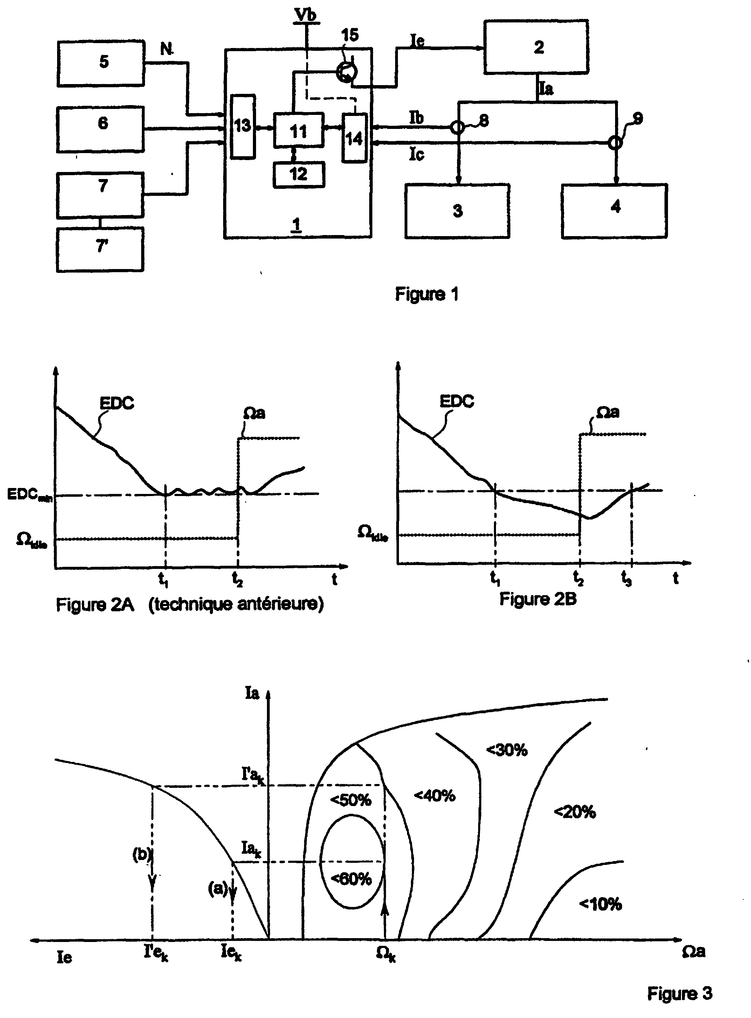

On se réfère à la figure 1 sur laquelle on a représenté un calculateur 1 comportant des moyens de commande 15 d'un courant d'excitation Ie d'un alternateur 2 d'un véhicule automobile. L'alternateur 2 est entraîné en rotation par le moteur du véhicule (non représenté), et délivre un courant électrique Ia=Ib+Ic à une batterie 3 et des consommateurs électriques 4. Classiquement, en fonction du courant d'excitation Ie, de la vitesse de rotation Ωa de l'alternateur, et du courant Ic d'alimentation des consommateurs 4, le courant débité par l'alternateur peut être suffisant pour fournir un courant Ib de recharge à la batterie, ou être suppléé par le courant Ib, alors de signe négatif, en provenance de la batterie. Ces courants sont mesurés par des capteurs appropriés, par exemple des capteurs à effet Hall 8 et 9, dont le signal est transmis à des moyens de mesure 14 indus dans le calculateur 1. Avantageusement, lorsque le calculateur 1 est également utilisé comme unité centrale de commande des consommateurs du véhicule, le courant Ic peut être déduit de l'état de commande de ceux-ci. De la même manière, la tension Vb aux bornes de la batterie peut être transmise par le capteur 8 aux moyens de mesure 14, ou mesurée directement en remarquant que le calculateur 1 est lui-même un consommateur alimenté par la tension Vb. Le calculateur 1 comporte en outre des moyens de calcul 11, tels qu'un microprocesseur, et des moyens de mémorisation 12, tels que des mémoires ROM et RAM propres à contenir un programme exécutable par le microprocesseur et des données qui seront détaillées par la suite. Le calculateur 1 est de plus doté de moyens de communication, tels qu'une interface d'un réseau de communication de type VAN ou CAN, lui permettant de recevoir des informations en provenance d'autres équipements du véhicule, comme en l'occurrence, le régime de rotation N du moteur fourni par un calculateur d'allumage ou d'injection 5, des informations relatives à la date et à rheure, délivrées par un dispositif d'information du conducteur 6, et des informations d'itinéraire fournies par un calculateur de navigation embarqué 7. Le calculateur de navigation 7 peut être avantageusement couplé à un récepteur d'informations de trafic T de type RDS permettant de compléter les informations d'itinéraire par la densité du trafic sur cet itinéraire.

On va maintenant décrire le fonctionnement du dispositif de la figure 1, en relation avec les graphes des figures 2A et 2B, représentant respectivement le fonctionnement des dispositifs de la technique antérieure et de celui de l'invention. On a représenté en trait pointillé sur ces graphes un profil temporel Ωa(t) de la vitesse de rotation de l'alternateur, tel que de t₀ à t₂ cette vitesse soit égale à une valeur Ω_{idle} correspondant sensiblement à la vitesse de l'alternateur lorsque le moteur tourne au ralenti, et au delà de t₂, cette vitesse soit très supérieure, par exemple correspondant à un régime moteur de l'ordre de 4500 tours par minute. On a représenté en trait plein révolution d'un paramètre EDC représentatif de l'état de charge de la batterie 3. Ce paramètre peut être simplement estimé en fonction de la tension Vb aux bornes de la batterie ou mieux, calculé itérativement en fonction de la tension Vb, du courant lb et du temps. On peut constater sur les ligures 2A et 2B que l'on a commandé une désexcitation de l'alternateur pour soulager le moteur pendant que celui-ci tourne au ralenti (vitesse de rotation de l'altemateur égale à Ω_{idle}). De ce fait, l'état de charge EDC de la batterie 3 décroît régulièrement, celle-ci alimentant seule les consommateurs 4. Lorsque à l'instant t₁, cet état de charge atteint un seuil minimum EDCₘᵢₙ, les dispositifs de la technique antérieure (figure 2A) commandent la remise en service de l'alternateur afin de préserver une charge suffisante à la batterie. Ceci a pour effet d'appliquer au moteur une charge supplémentaire, pouvant perturber son fonctionnement et générer de la pollution. Au contraire, sur la figure 2B, selon l'invention et comme on l'expliquera ultérieurement, le calculateur 1 a connaissance du profil temporel Ωa(t) des vitesses de rotation de l'alternateur, et sait qu'à partir de l'instant t₂, situé dans le futur, des conditions de vitesse de rotation de l'alternateur permettant une recharge efficace de la batterie seront rencontrées. Le calculateur peut alors déterminer, en fonction du courant Ic absorbé par les consommateurs du véhicule, un profil temporel du courant d'excitation Ie(t) à appliquer à l'altemateur, à partir de t₂, propre à assurer la recharge de la batterie au moins jusqu'au seuil minimum atteint à l'instant t₃. De ce fait le dispositif selon l'invention autorise le franchissement du seuil EDCₘᵢₙ de t₁ à t₂, et permet d'optimiser le fonctionnement du couple moteur/alternateur.

On va maintenant détailler un premier mode de mise en oeuvre du procédé permettant au calculateur 1 de prévoir le profil temporel des vitesses de rotation de l'alternateur. Dans ce mode, le calculateur 1 ne fait usage que des informations fournies par le calculateur d'allumage ou d'injection 5 et le dispositif d'information du conducteur 6. A partir de ces informations, le calculateur 1 construit et mémorise une base de données expérimentales de la manière suivante: Le début d'un trajet est détecté par la mise sous tension du calculateur, correspondant à la mise du contact du véhicule. Le calculateur lit alors la date et l'heure fournies par le dispositif d'lnformation 6 et classe ce trajet dans une catégorie prédéfinie. En observant que la majorité des trajets courts, sur lesquels l'optimisation que ion veut réaliser est la plus rentable, correspondent à des trajets répétitifs, on pourra déterminer un certain nombre de catégories par la date et l'heure de leur début, par exemple trajet du matin, jour de semaine si le trajet commence entre 6 heures et 10 heures, du lundi au vendredi, et ainsi de suite. Le calculateur lit ensuite périodiquement les informations de régime moteur qui lui sont fournies par le calculateur d'allumage 5 via les moyens de communication 13 et en déduit la vitesse de rotation Ωa de l'alternateur. Cette vitesse est alors enregistrée dans les moyens de mémorisation 12, par tranches temporelles correspondant au délai écoulé depuis le début du trajet. On peut par exemple effectuer la moyenne des données de vitesse de rotation ainsi acquises avec celles obtenues lors de trajets précédents pour une même catégorie de trajet dans une même tranche temporelle. On obtient ainsi un profil temporel probable des vitesses de rotation de l'alternateur Ωa(t) sur cette catégorie de trajet. Ce profil sera utilisé pour la détermination du courant d'excitation Ie de l'alternateur, comme on le verra par la suite.

Seion un second mode de réalisation de l'invention, on utilise avantageusement le fait que le véhicule puisse être muni d'un calculateur de navigation embarqué 7 pour obtenir le profil temporel probable des vitesses de rotation de l'alternateur Ωa(t). En effet, ce calculateur calcule un itinéraire prévu pour le trajet et fournit des informations relatives à chaque tronçon d'itinéraire, comme la longueur du tronçon et la nature des voles empruntées (autoroute, voie rapide, rue, chemin, etc...). On peut alors, en utilisant une table préétablie de vitesses de rotation Ωa en fonction de la nature de la voie, calculer le profil recherché. De plus, lorsque le calculateur de navigation est associé à un récepteur d'informations de trafic 7', chaque tronçon d'itinéraire peut être affecté d'une information relative à la densité du trafic sur ce tronçon. On peut alors en déduire la durée et la vitesse probable de roulage sur chaque tronçon, et par un simple rapport, le profil temporel probable des vitesses de rotation de l'altemateur Ωa(t).

On en vient maintenant à la détermination de la commande du courant d'excitation Ie de l'altemateur. Au début du trajet (instant t₀), c'est à dire à la mise sous tension du calculateur 1, celui ci détermine un état de charge initial EDC₀ de la batterie 3 en mesurant par exemple sa tension à vide au repos. Cet état initial et la mesure du courant de batterie Ib permettent de suivre l'évolution de l'état de charge de la batterie 3 tout au long du trajet au moyen de l'équation: 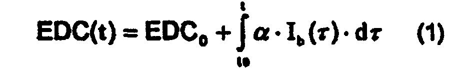 dans laquelle α est un rendement de charge tel que α=1 si Ib est négatif (la batterie débite vers les consommateurs 4) et α≤1 si Ib est positif (la batterie est rechargée par l'alternateur).

Le calculateur 1 calcule ensuite le profil temporel des vitesses de rotation Ωa(t) de l'alternateur 2 par l'une quelconque des méthodes vues précédemment, ou encore par une association des deux.

Il mesure ensuite le courant Ic absorbé par les consommateurs 4 au moyen du capteur 9 et des moyens de mesure 14. En considérant le courant Ic constant pour toute la durée du trajet, il détermine ensuite un profil temporel Ie(t) du courant d'excitation le selon une stratégie d'optimisation prédéterminée. Par exemple, on pourra choisir Ie tel que le soit nul si Ωa est inférieur à un seuil Ω_{idle} et Ie assure un rendement maximal pour l'altemateur si Ωa est supérieur à ce seuil. Comme on l'a montré sur la figure 3 qui représente les courbes de rendement de l'alternateur mémorisées dans le calculateur 1, pour une vitesse de rotation Ωₖ, en suivant la flèche repérée (a) on détermine le courant Iaₖ tel que ce rendement soit maximal (ici 60%) et on en tire le courant d'excitation Ieₖ correspondant. On en déduit le courant de batterie Ib=Ia-Ic à tout instant que l'on applique à l'équation (1) pour déterminer l'état de charge final EDC_{f} de la batterie à l'issue du trajet. Si l'état de charge final ainsi obtenu est inférieur à une valeur minimum prédéterminée, par exemple 70% de la charge nominale de la batterie, on recalcule un profil temporel Ie(t) du courant d'excitation tel que le courant Ia fourni par l'alternateur soit supérieur au courant précédemment calculé, tout en maximisant le rendement (flèche (b) sur la figure, rendement 50%, I'aₖ, I'eₖ). Le profil temporel Ie(t) ainsi calculé est alors mémorisé dans la mémoire 12 et appliqué à l'alternateur par les moyens de commande 15.

Le profil Ie(t) est réactualisé périodiquement, par exemple toutes les 5 minutes, en remesurant le courant Ic absorbé par les consommateurs 4 et en recalculant l'état de charge final de la batterie.

Bien entendu, l'invention n'est pas limitée au mode de réalisation décrit et représenté qui n'a été donné qu'à titre d'exemple. On pourrait, par analogie avec le premier mode de détermination du profil temporel Ωa(t) de vitesse de l'alternateur, déterminer un profil temporel Ic(t) du courant absorbé par les consommateurs à partir d'enregistrements effectués sur les trajets précédents et utiliser ce profil pour déterminer un profil de courant d'excitation au moyen d'une autre méthode d'optimisation que la méthode par "essai et erreur" décrite ci-dessus, en recherchant par exemple à minimiser un critère supplémentaire, tel que la consommation de carburant du véhicule, ou les émissions de polluants.

## Revendications

1. Procédé de commande d'un alternateur (2) fournissant un courant électrique alimentant des consommateurs (4) électriques d'un véhicule automobile équipé d'un moteur à combustion interne et rechargeant une batterie (3), procédé selon lequel on commande l'intensité d'un courant d'excitation (Ie) de l'alternateur en fonction de conditions de fonctionnement du moteur et du véhicule sur un trajet, **caractérisé en ce que**, pour chaque trajet,
a) on détermine un état de charge initial (EDC₀) de la batterie,
b) on calcule un profil temporel des vitesses de rotation de l'albemateur (Ωa(t)) probable pour ce trajet,
c) on mesure le courant (Ic) absorbé par les consommateurs,
d) on détermine un profil temporel optimal du courant d'excitation de l'alternateur (Ie(t)) tel qu'à l'issue du trajet, l'état de charge final (EDC₁) de la batterie soit au moins égal à un seuil prédéterminé, et
e) on commande l'intensité du courant d'excitation (Ie) en fonction du profil de courant déterminé.

2. Procédé selon la revendication 1, **caractérisé en ce que** l'on répète périodiquement les étapes c et d pendant toute la durée du trajet.

3. Procédé selon la revendication 1 ou 2, **caractérisé en ce que** l'on calcule le profil temporel des vitesses de rotation de l'alternateur (Ωa(t)) à partir d'enregistrements effectués lors des trajets précédents.

4. Procédé selon la revendication 1 ou 2, **caractérisé en ce que** l'on calcule le profil temporel des vitesses de rotation de l'alternateur (Ωa(t)) à partir d'informations relatives au trajet prévu fournies par un dispositif de navigation (7) embarqué dans le véhicule.

5. Procédé selon la revendication 4, **caractérisé en ce que** l'on utilise en outre des informations relatives à la densité du trafic sur le trajet considéré.

6. Procédé selon la revendication 1 ou 2, **caractérisé en ce que** l'on calcule le profil temporel optimal du courant d'excitation (Ie(t)) de telle sorte que le rendement de l'alternateur soit maximal si sa vitesse de rotation (Ωa(t)) est supérieure à un seuil prédéterminé (Ω_{idle}) et que le courant d'excitation soit nul dans le cas contraire.

7. Dispositif pour la mise en oeuvre du procédé selon la revendication 1 ou 2, **caractérisé en ce qu'**il comporte en association
• des moyens de communication (13) avec au moins l'un des dispositifs de gestion du moteur (5) et de navigation (7)
• des moyens de mesure (14) adaptés pour déterminer l'état de charge (EDC) d'une batterie (BAT) et l'intensité du courant (Ic) foumi aux consommateurs électriques du véhicule
• des moyens de calcul (11) et de mémorisation (12) adaptés pour :
◇ calculer, à partir des informations transmises par les moyens de communication, au début de chaque trajet, un profil temporel des vitesses de rotation de l'alternateur (Ωa(t)) probable pour ce trajet,
◇ déterminer en fonction des informations fournies par les moyens de mesure, un profil temporel optimal du courant d'excitation de l'alternateur (Ie(t)) tel qu'à l'issue du trajet, l'état de charge final (EDC_{f}) de la batterie soit au moins égal à un seuil prédéterminé
• des moyens de commande (15) de l'intensité du courant d'excitation (Ie) fourni à l'alternateur.

## Patentansprüche

1. Verfahren zum Steuern eines Wechselstromgenerators (2), der einen elektrischen Strom liefert, mit dem elektrische Verbraucher (4) eines mit einer Brennkraftmaschine ausgerüsteten Kraftfahrzeuges gespeist und eine Batterie (3) wieder aufgeladen wird, bei welchem Verfahren die Stärke eines Erregerstromes (Ie) des Wechselstromgenerators in Abhängigkeit von Betriebsbedingungen der Brennkraftmaschine und des Fahrzeuges bei einer Fahrt gesteuert wird, **dadurch gekennzeichnet, dass** für jede Fahrt
a) ein Anfangsladezustand (EDCₒ) der Batterie bestimmt wird,
b) ein für diese Fahrt wahrscheinliches Zeitprofil der Drehgeschwindigkeiten des Wechselstromgenerators (Ωa(t)) berechnet wird,
c) der von den Verbrauchern verbrauchte Strom (Ic) gemessen wird,
d) ein optimales Zeitprofil des Erregerstroms des Wechselstromgenerators (Ie(t)) so bestimmt wird, dass am Ende der Fahrt der Endladezustand (EDC_{f}) der Batterie zumindest gleich einer vorgegebenen Schwelle ist, und
e) die Stärke des Erregerstroms (Ie) in Abhängigkeit von dem bestimmten Zeitprofil gesteuert wird.

2. Verfahren nach Anspruch 1, **dadurch gekennzeichnet, dass** die Schritte c und d während der gesamten Dauer der Fahrt periodisch wiederholt werden.

3. Verfahren nach Anspruch 1 oder 2, **dadurch gekennzeichnet, dass** das Zeitprofil der Drehgeschwindigkeiten des Wechselstromgenerators (Ωa(t)) ausgehend von während der vorhergehenden Fahrten erfolgten Aufzeichnungen berechnet wird.

4. Verfahren nach Anspruch 1 oder 2, **dadurch gekennzeichnet, dass** das Zeitprofil der Drehgeschwindigkeiten des Wechselstromgenerators (Ωa(t)) ausgehend von Informationen bezüglich der vorgesehenen Fahrt berechnet wird, die von einer Navigationsvorrichtung (7) im Fahrzeug geliefert werden.

5. Verfahren nach Anspruch 4, **dadurch gekennzeichnet, dass** ferner Informationen bezüglich der Verkehrsdichte auf der in Betracht gezogenen Fahrt verwendet werden.

6. Verfahren nach Anspruch 1 oder 2, **dadurch gekennzeichnet, dass** das optimale Zeitprofil des Erregerstroms (Ie(t)) so berechnet wird, dass der Wirkungsgrad des Wechselstromgenerators maximal wird, wenn die Drehgeschwindigkeit (Ωa(t)) größer als eine vorgegebene Schwelle (Ω_{idle}) ist, und dass der Erregerstrom im entgegengesetzten Fall zu Null wird.

7. Vorrichtung zum Durchführen des Verfahrens nach Anspruch 1 oder 2, **dadurch gekennzeichnet, dass** sie in Kombination aufweist:
- Kommunikationsmittel (13) für eine Kommunikation mit mindestens der Motorsteuervorrichtung (5) oder der Navigationsvorrichtung (7),
- Messmittel (14) zum Bestimmen des Ladezustandes (EDC) einer Batterie (BAT) und der Stärke des Stroms (Ic), der den elektrischen Verbrauchern des Fahrzeuges zugeführt wird,
- Rechnermittel (11) und Speichermittel (12) zum:
- Berechnen eines für diese Fahrt wahrscheinlichen Zeitprofils der Drehgeschwindigkeiten des Wechselstromgenerators (Ωa(t)) zu Beginn jeder Fahrt ausgehend von durch die Kommunikationsmittel übertragenen Informationen, und
- Bestimmen, in Abhängigkeit von von den Messmitteln gelieferten Informationen, eines optimalen Zeitprofils des Erregerstroms des Wechselstromgenerators (Ie(t)) in der Weise, dass am Ende der Fahrt der Endladezustand (EDC_{f}) der Batterie mindestens gleich einer vorgegebenen Schwelle ist,
- Steuermittel (15) zum Steuern der Stärke des dem Wechselstromgenerator zugeführten Erregerstroms (Ie).

## Claims

1. Method for controlling an alternator (2) that supplies an electrical current to the electricity-consuming elements (4) of a motor vehicle with an internal combustion engine and recharges a battery (3), according to which the intensity of an excitation current (Ie) of the alternator is controlled as a function of the operating conditions of the motor and of the vehicle during a trip, **characterised in that**, for each trip,
a) the initial state of charge (EDC₀) of the battery is determined,
b) a probable time profile of the rotation speeds of the alternator (Ωa(t)) is calculated for the trip,
c) the current (Ic) used by the electricity-consuming elements is measured,
d) an optimum time profile of the excitation current of the alternator (Ie(t)) as of the beginning of the trip is determined, the final state of charge (EDC_{f}) of the battery being at least equal to a predetermined threshold, and
e) the intensity of the excitation current (Ie) is controlled as a function of the current profile determined.

2. Method according to Claim 1, **characterised in that** stages c and d are repeated periodically throughout the trip.

3. Method according to Claim 1 or 2, **characterised in that** the time profile of the rotation speeds of the alternator (Ωa(t)) is calculated using records taken during previous trips.

4. Method according to Claim 1 or 2, **characterised in that** the time profile of the rotation speeds of the alternator (Ωa(t)) is calculated using information relating to the anticipated trip supplied by a navigation device (7) on board the vehicle.

5. Method according to Claim 4, **characterised in that** information relating to the density of traffic on the trip in question is also used.

6. Method according to Claim 1 or 2, **characterised in that** the optimum time profile of the excitation current (Ie(t)) is calculated so that the efficiency of the alternator is maximised if its rotation speed (Ωa(t)) is greater than a predetermined threshold (Ω_{idle}) and the excitation current is zero if this is not the case.

7. Device for the implementation of the method according to Claim 1 or 2, **characterised in that** it combines
- means of communication (13) with at least one of the engine (5) and navigation (7) control devices
- measuring means (14) designed to determine the state of charge (EDC) of a battery (BAT) and the current intensity (Ic) supplied to the electricity-consuming elements of the vehicle
- processing means (11) and memory means (12) designed to:
- calculate, using information transmitted by the means of communication, at the beginning of each trip, a probable time profile of the rotation speeds of the alternator (Ωa(t)) for each trip,
- determine, as a function of the information provided by the measuring means, an optimum time profile of the excitation current of the alternator (Ie(t)) as of the beginning of the trip, the final state of charge (EDC_{f}) being at least equal to a predetermined threshold
- means of controlling (15) the intensity of the excitation current (Ie) supplied to the alternator.
